# EUROPEAN PATENT APPLICATION

(11) **EP 2 426 982 A1**
(43) Date of publication of application: **07.03.2012**
(21) Application number: 10769237.8
(22) Date of filing: 30.03.2010
(51) Int. Cl.: H04W 28/04

(54) **METHOD AND EQUIPMENT FOR SENDING RADIO LINK LAYER STATUS PACKAGE**

(30) Priority: 27.04.2009 CN 200910135583
(71) Applicant: ZTE Corporation, Shenzhen, Guangdong 518057 (CN)
(72) Inventor: HUANG, Kan, Shenzhen Guangdong 518057 (CN); ZHANG, Jian, Shenzhen Guangdong 518057 (CN)
(74) Representative: Maggs, Michael Norman
(86) International application number: PCT/CN2010/071428
(87) International publication number: WO 2010/124548

(57) **Abstract**

The present invention discloses a method and a device for sending a radio link layer status package, and the sending method comprises: when the universal terrestrial radio access network detects that there is data to be sent which has been sent but has not been acknowledged, if a response from a receiving side is not received after a radio link layer status package is sent to the receiving side, a reset operation of the radio link layer is executed. The present invention resets the radio link control layer in time when the path between the universal terrestrial radio access network and the receiving side is failed or invalid, therefore it is advantageous to maintain the stability and self-recovery of system.

## Description

### Technical Field

The present invention relates to the field of the digital mobile communication technology, and particularly, to a method and a device for sending the radio link control layer status package.

### Background of the Related Art

With the increasing requirement of users for data transmission speed in mobile environment and the continuous development of the mobile communication technology, High Speed Packet Access Plus (HSPA+) has attracted more and more concern and attention from people.

In the 3^{rd} Generation Partnership Project (3GPP) TS 25.322.R7 protocol version, in order to adapt to the downlink high speed service development, flexible size RLC PDU is configured in the radio link control (RLC) of the universal terrestrial radio access network (UTRAN) to increase the transmission efficiency of data. Meanwhile, in order to reduce the air-interface bandwidth waste due to retransmitting larger data package, a new status package, called POLL_SUFI (super field polling), is defined, and the following table shows the structure of this package, which comprises type (POLL filled) and the serial number.

| |
|---|
| Type=POLL |
| Poll_SN |

When the Polling in the RLC layer is triggered, if there is no new data or no retransmission data to be sent, the status package POLL-SUFI can be used to replace the data package which is originally required to be sent but has not been acknowledged since status package POLL_SUFI is very short, wherein the serial number POLL_SN is filled in with the serial number of the last transmitted radio link layer protocol data unit (RLC PDU) which has not been acknowledged, and its value is VT(S)-1 (VT(S) indicates the serial number of the next PDU to be sent). The processing method after the receiving side receives the status package POLL_SUFI is the same as processing the other data packages whose type is POLL, and the corresponding status package is returned according to the actual receiving condition. With this method, the bandwidth waste due to sending a larger data package can be reduced, especially when the package is retransmitted for a lot of times, recovering the window sliding of the radio link layer on both sides can be achieved with little cost so as to continue transmitting the data, and if there is a problem found in the transmission link or the air interface, the RLC reset procedure is required to be carried out.

The existing protocol only defines such a new status package POLL_SUFI, and specifies that the universal terrestrial radio access network (UTRAN) can send the POLL_SUFI status package as long as the flexible size RLC PDU is defined. However, in practical applications, after the UTRAN sends the status package POLL_SUFI, the user equipment cannot receive the POLL_SUFI status package due to the problem of the transmission path or the radio path, so it cannot return a response. Since the UTRAN has no new data required to be sent, the UTRAN will retransmit the POLL_SUFI status package again and again and the reset cannot be carried out automatically, thus the system enters into an abnormal condition that is not recoverable.

### Summary of the Invention

The technical problem to be solved by the present invention is to offer a method and device for sending a radio link layer status package to maintain the stability and self-recovery of system.

In order to solve the above technical problem, the present invention offers a method for sending the radio link layer status package, and the method comprises:
when the UTRAN detects that there is data to be sent that has already been sent but has not been acknowledged, if not receiving a response from a receiving side after sending a radio link layer status package to the receiving side, carrying out a reset operation of the radio link layer.

The above method might also have the following features:
after said UTRAN detects that there is data to be sent that has already been sent but has not been acknowledged, the method also comprises: detecting whether the radio link layer is configured with a flexible size PDU or not;
if it detects that the radio link layer is configured with the flexible size PDU, the radio link layer status package sent to the receiving side is a POLL_SUFI status package.

The above method might also have the following feature:
said not receiving a response from a receiving side refers to not receiving the response from the receiving side in the time set by the system after said UTRAN sends said radio link layer status package.

The above method might also have the following feature:
said not receiving a response from a receiving side refers to not receiving the response from the receiving side in the time set by the system after said UTRAN sends said radio link layer status package, then retransmitting said radio link layer status package to the receiving side, and the retransmitting times reaching to the maximum sending times set by the system and still not receiving the response from the receiving side in the time set by the system.

The above method might have the following feature:
when the UTRAN detects that the radio link layer is not configured with the flexible size PDU after it detects that there is data to be sent which has already been sent but has not been acknowledged, said method also comprises:
   activating a POLL flag of the last transmitted PDU data package and sending said PDU data package, and if the response from the receiving side is not received in the time set by the system, retransmitting said PDU data package to the receiving side, and while the retransmitting times reach to the maximum sending times set by the system and still not receiving the response from the receiving side in the time set by the system, carrying out a reset operation of the radio link layer.

The above method might also have the following feature:
in the step of retransmitting said radio link layer status package to the receiving side, use a retransmitting times flag in the last transmitted PDU data package to count the times of sending said radio link layer status package.

The above method might also have the following feature:
the value of the maximum sending times of said radio link layer status package is different from that of the maximum sending times of said PDU data package.

The above method might also have the following feature:
said not receiving the response from the receiving side refers to after said UTRAN sends said radio link layer status package to the receiving side, if not receiving the response from the receiving side in the time set by the system, retransmitting said radio link layer status package to the receiving side, and when the retransmitting times reach to the maximum sending times of the radio link layer status package set by the system, activating the POLL flag of the last transmitted PDU data package and retransmitting this data package, and if not receiving the response from the receiving side in the time set by the system, retransmitting said PDU data package to the receiving side, and after the retransmitting times reach to the maximum sending times of the PDU data package set by the system, still not receiving the response from the receiving side in the time set by the system.

The above method might have the following feature:
the maximum sending times of said radio link layer status package is larger than the maximum sending times of said PDU data package.

The above method might also have the following feature:
in the step of retransmitting said PDU data package to the receiving side, use the retransmitting times flag in the last transmitted PDU data package to count the times of sending said PDU data package.

In the step of retransmitting said radio link layer status package to the receiving side, set an individual counter to count the times of sending said radio link layer status package.

In order to solve the above technical problem, the present invention offers a device for sending the radio link layer status package to apply into the UTRAN, and said device comprises a sending detection module, a sending module, a receiving detection module and a resetting module, wherein:
said sending detection module is configured to: notify said sending module when detecting that there is data to be sent that has already been sent but has not been acknowledged;
said sending module is configured to: send the radio link layer status package to the receiving side according to the detection result of said sending detection module;
said receiving detection module is configured to: indicate the resetting module to carry out a reset operation of the radio link layer if the response from the receiving side is not received after said sending module sends the radio link layer status package;
said resetting module is configured to: carry out the reset operation of the radio link layer according to the indication of said receiving detection module.

The above device might also have the following feature:
said sending detection module is also configured to: notify said sending module when detecting that there is data to be sent which has already been sent but has not been acknowledged and that the radio link layer is configured with the flexible size PDU;
said sending module is also configured to: send the POLL_SUFI status package to the receiving side if the sending detection module detects that there is data to be sent that has already been sent but has not been acknowledged and that the radio link layer is configured with the flexible size PDU.

The above device might also have the following feature:
said receiving detection module is also configured to: indicate the resetting module to carry out the reset operation of the radio link layer if the response from the receiving side is not received in the time set by the system after said sending module sends said radio link layer status package.

Said device might also have the following feature:
said receiving detection module is also configured to: indicate the resetting module to carry out the reset operation of the radio link layer, if the response from the receiving side is not received in the time set by the system after said sending module sends said radio link layer status package, retransmit said radio link layer status package to the receiving side, and the response from the receiving side is still not received in the time set by the system when the retransmitting times reach to the maximum sending times set by the system.

Said device might also have the following feature:
said receiving detection module is also configured to: indicate the resetting module to carry out the reset operation of the radio link layer, if the response from the receiving side is not received in the time set by the system after said sending module sends said radio link layer status package, retransmit said radio link layer status package to the receiving side, and activate the POLL flag of the last transmitted PDU data package and send the PDU data package after the retransmitting times reach to the maximum sending times of the radio link layer status package set by the system, and if the response from the receiving side is not received in the time set by the system, retransmit said PDU data package to the receiving side, and the response from said receiving side is still not received in the time set by the system after the retransmitting times reach to the maximum sending times of the PDU data package set by the system.

With the method offered in the present invention, the RLC can be reset in time when there is a path failed or invalid between the UTRAN and the receiving side, therefore it is advantageous to maintain the stability and self-recovery of system.

### Brief Description of Drawings

FIG. 1 is a flow chart of the method for sending the radio link layer status package in accordance with an embodiment;
FIG. 2 is a flow chart of the method for sending the radio link layer status package in accordance with a first embodiment;
FIG. 3 is a flow chart of the method for sending the radio link layer status package in accordance with a second embodiment;
FIG. 4 is a flow chart of the method for sending the radio link layer status package in accordance with a fourth embodiment.

### Preferred Embodiments of the Present Invention

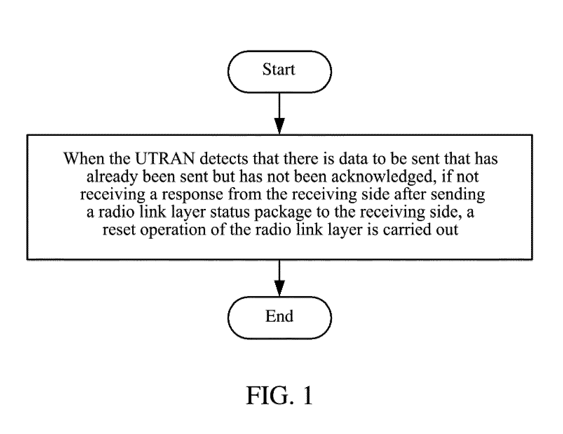

As shown in FIG. 1, the method for sending the radio link layer status package comprises: the UTRAN detects that there is data to be sent that has already been sent but has not been acknowledged, if the response from the receiving side is not received after sending the radio link layer status package to the receiving side, the reset operation of the radio link layer is carried out.

### The first embodiment

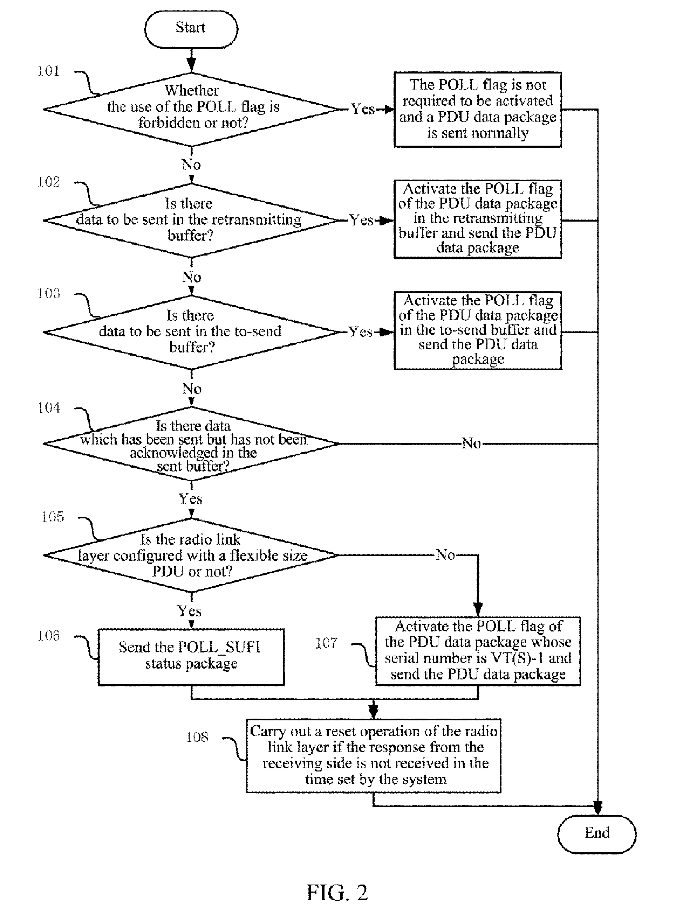

As shown in FIG. 2, the method for sending the radio link layer status package comprises:
Step 101, judge whether the use of POLL flag is forbidden or not, and there is no need to activate the POLL flag if yes, and send the PDU data package normally; otherwise, proceed to step 102;
Step 102, judge whether there is data to be sent in the retransmitting buffer or not, and activate the POLL flag of the PDU data package in the retransmitting buffer and send the PDU data package if yes; otherwise, proceed to step 103;
Step 103, judge whether there is data to be sent in the to-send buffer or not, and activate the POLL flag of the PDU data package in the to-send buffer and send the PDU data package if yes; otherwise, proceed to step 104;
Step 104, judge whether there is data which has already been sent but has not been acknowledged in the sent buffer or not, and proceed to step 105 if yes; otherwise, end the process;
Step 105, judge whether the radio link layer is configured with a flexible size PDU or not, and proceed to step 106 if yes; otherwise, proceed to step 107;
Step 106, send the POLL_SUFI status package, and the serial number of the POLL_SUFI status package is VT(S)-1, that is, it corresponds to the serial number of the last transmitted data package; and proceed to step 108;
Step 107, activate the POLL flag of the PDU data package whose serial number is VT(S)-1 and send it; and proceed to step 108;
Step 108, if the response from the receiving side is not received in the time set by the system, the reset operation of the radio link layer is carried out; end the process.

In the above first embodiment, after sending a POLL_SUFI status package or a PDU data package whose serial number is VT(S)-1 and POLL flag is activated for one time, if the response from the receiving side is not received in the time set by the system, the reset operation of the radio link layer is carried out.

### The second embodiment

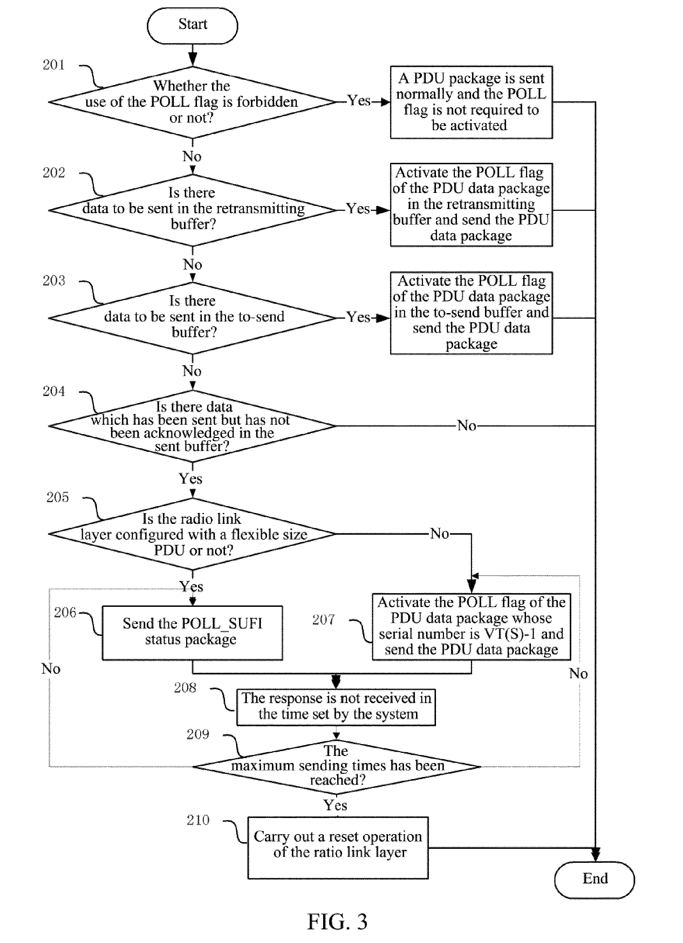

The UTRAN sets the maximum sending times, and after sending the POLL_SUFI status package or the PDU data package whose serial number is VT(S)-1 and POLL flag is activated, when the response from the receiving side is not received in the time set by the system, retransmit the POLL_SUFI status package or the PDU data package whose serial number is VT(S)-1 and the POLL flag is activated to the receiving side, and when the retransmitting times reach to maximum sending times and the response from the receiving side is still not received in the time set by the system, the reset operation of the radio link layer is carried out. As shown in FIG. 3, the process specifically comprises the following steps:
Steps 201∼207 in the second embodiment are the same as steps 101∼107 in the first embodiment;
Step 208, the response from the receiving side is not received in the time set by the system;
Step 209, judge whether the sending times of the POLL-SUFI status package or the PDU data package whose serial number is VT(S)-1 and POLL flag is activated reach to the maximum sending times set by the system or not, and proceed to step 210 if yes; otherwise, keep retransmitting;
count the retransmitting times , and use the retransmitting times flag in the last transmitted PDU data package, that is, VT (DAT), and add 1 to the value of VT (DAT) of the PDU data package every time when retransmitting.
Step 210, the reset operation of the radio link layer is carried out; end the process.

Different from the first embodiment, when the second embodiment sends the POLL_SUFI status package or the PDU data package whose serial number is VT(S)-1 and POLL flag is activated for several times and the response from the receiving side is not received, the reset operation of the radio link layer is carried out and the allowed time of the response returned from the receiving side is extended.

### The third embodiment

The flow chart of the third embodiment is basically the same as that of the second embodiment, and the difference is, the maximum sending times of the POLL_SUFI status package is configured to be different from that of the PDU data package whose serial number is VT(S)-1 and POLL flag is activated, and a new counter such as VT(POLL) is configured for the POLL-SUFI status package, and the value of VT(POLL) is added by 1 every time when retransmitting the POLL_SUFI status package. The PDU data package whose serial number is VT(S)-1 still uses VT (DAT).

### The fourth embodiment

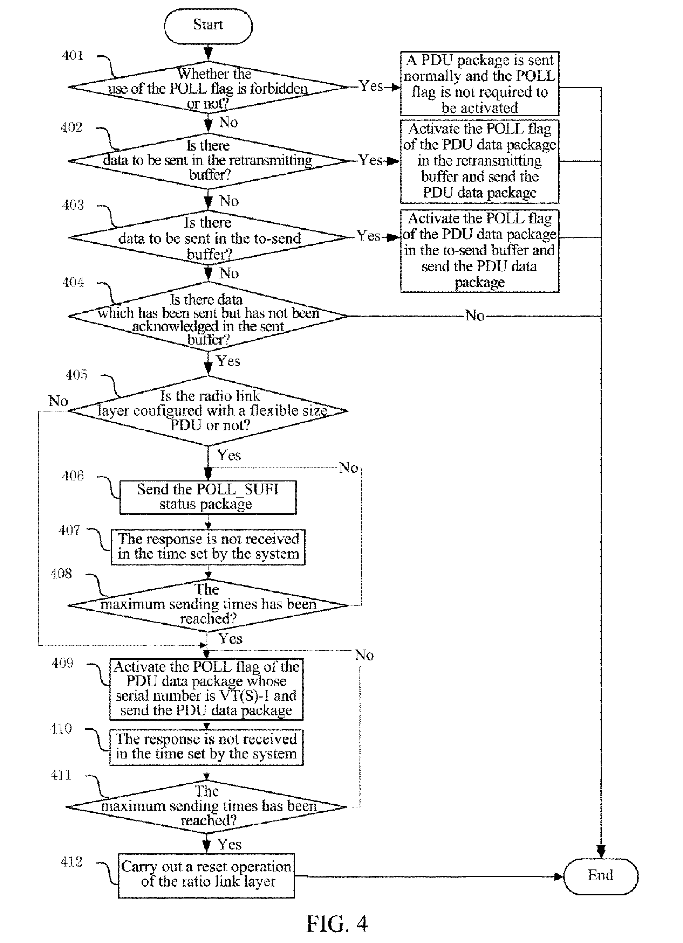

The fourth embodiment takes the receiving side which does not support the POLL-SUFI status package into account, and if the response from the receiving side is not received after sending the POLL_SUFI status package for several times, it might be because that the receiving side does not support the POLL_SUFI status package. As shown in FIG. 4, the fourth embodiment specifically comprises the following steps:
Steps 401∼404 in the fourth embodiment are the same as steps 101∼104 in the first embodiment;
Step 405, judge whether the radio link layer is configured with a flexible size PDU or not, and proceed to step 406 if yes; otherwise, proceed to step 409;
Step 406, send the POLL_SUFI status package, and the serial number of the POLL_SUFI status package is VT(S)-1, that is, it corresponds to the serial number of the last transmitted data package;
Step 407, the response from the receiving side is not received in the time set by the system;
Step 408, judge whether the sending times of the POLL_SUFI status package reach to the maximum sending times of the POLL_SUFI status package which is set by the system for the POLL_SUFI status package or not, and proceed to step 409 if yes, otherwise proceed to step 406 and retransmit the POLL_SUFI status package;
Step 409, activate the POLL flag of the PDU data package whose serial number is VT(S)-1 and send the PDU data package;
Step 410, the response from the receiving side is not received in the time set by the system;
Step 411, judge whether the sending times of the PDU data package whose serial number is VT(S)-1 and POLL flag is activated reach to the maximum sending times which is set for the PDU data package by the system or not, and proceed to step 412 if yes; otherwise, proceed to step 409 and retransmit the package;
the value of the maximum sending times of the PDU data package in this step is different from that of the POLL_SUFI status package in step 408. In general conditions, the value of the maximum sending times of the PDU data package is larger than that of the POLL_SUFI status package, which is advantageous to save the judgment time, and it is easy to judge whether the receiving side supports the POLL_SUFI status package or not.
Step 412, the reset operation of the radio link layer is carried out, and the process is ended.

In the fourth embodiment, the mode for counting the retransmitting times can be the same as that in the third embodiment.

To sum up, the device for sending the radio link layer status package in accordance with the embodiments of the present invention can be applied in the UTRAN, and the device comprises a sending detection module, a sending module, a receiving detection module and a resetting module, wherein:
said sending detection module is configured to: notify said sending module when detecting that there is data to be sent that has already been sent but has not been acknowledged;
said sending module is configured to: send the radio link layer status package to the receiving side according to the detection result of said sending detection module;
said receiving detection module is configured to: indicate the resetting module to carry out the reset operation of the radio link layer if the response from the receiving side is not received after said sending module sends the radio link layer status package;
said resetting module is configured to: carry out the reset operation of the radio link layer according to the indication from said receiving detection module.

Said sending detection module is also configured to: notify said sending module when detecting that there is data to be sent which has already been sent but has not been acknowledged and that the radio link layer is configured with the flexible size PDU; said sending module is also configured to: send the POLL_SUFI status package to the receiving side if the sending detection module detects that there is data to be sent which has already been sent but has not been acknowledged and that the radio link layer is configured with the flexible size PDU.

Said receiving detection module is also configured to: indicate the resetting module to carry out the reset operation of the radio link layer if the response from the receiving side is not received in the time set by the system after said sending module sends said radio link layer status package.

Said receiving detection module is also configured to: indicate the resetting module to carry out the reset operation of the radio link layer, if the response from the receiving side is not received in the time set by the system after said sending module send said radio link layer status package, retransmit said radio link layer status package to the receiving side, and when the retransmitting times reach to the maximum sending times set by the system, the response from the receiving side is still not received in the time set by the system.

Said receiving detection module is also configured to: indicate the resetting module to carry out the reset operation of the radio link layer, if the response from the receiving side is not received in the time set by the system after said sending module sends said radio link layer status package, retransmit said radio link layer status package to the receiving side, and activate the POLL flag of the last transmitted PDU data package and sends the data package after retransmitting times reach to the maximum sending times of the radio link layer status package set by the system, and if the response from the receiving side is not received in the time set by the system, retransmit said PDU data package to the receiving side, and the response from the receiving side is still not received in the time set by the system after the retransmitting times reach to the maximum sending times of the PDU data package set by the system.

With the above method, the RLC reset can be carried out in time when there is a path failed or invalid between the UTRAN and the receiving side, therefore it is advantageous to maintain the stability and self-recovery of system.

Although the present invention combined with specific embodiments is described, for those skilled in the art, the modifications and variations can be carried out without departing from the spirit and scope of the present invention. Such modifications and variations should be considered within the scope of the appended claims and the present invention.

### Industrial Applicability

The present invention offers a method and device for sending the radio link layer status package, and the RLC reset can be carried out in time when there is a path failed or invalid between the UTRAN and the receiving side, therefore it is advantageous to maintain the stability and self-recovery of system.

## Claims

1. A method for sending a radio link layer status package, comprising:
when universal terrestrial radio access network detects that there is data to be sent that has already been sent but has not been acknowledged, not receiving a response from a receiving side after sending the radio link layer status package to the receiving side, then carrying out a reset operation of radio link layer.

2. The method of claim 1, wherein,
after said universal terrestrial radio access network detects that there is data to be sent that has already been sent but has not been acknowledged, the method also comprises: detecting whether the radio link layer is configured with a flexible size protocol data unit or not;
if detecting that the radio link layer is configured with the flexible size protocol data unit, the radio link layer status package sent to the receiving side is a POLL_SUFI status package.

3. The method of claim 2, wherein:
said not receiving the response from the receiving side refers to not receiving the response from the receiving side in the time set by system after said universal terrestrial radio access network sends said radio link layer status package.

4. The method of claim 2, wherein:
said not receiving the response from the receiving side refers to after said universal terrestrial radio access network sends said radio link layer status package, not receiving the response from the receiving side in the time set by system, then retransmitting said radio link layer status package to the receiving side, and still not receiving the response from the receiving side in the time set by the system when retransmitting times reach to maximum sending times set by the system.

5. The method of claim 4, when the universal terrestrial radio access network detects that the radio link layer is not configured with the flexible size protocol data unit after the universal terrestrial radio access network detects that there is data to be sent that has already been sent but has not been acknowledged, said method also comprising:
activating a POLL flag of a last transmitted protocol data unit data package and sending said protocol data unit data package, and if the response from the receiving side is not received in the time set by the system, retransmitting said protocol data unit data package to the receiving side, and if the response from the receiving side is still not received in the time set by the system and the retransmitting times reach to the maximum sending times set by the system, carrying out the reset operation of the radio link layer.

6. The method of claim 4, wherein:
in the step of retransmitting said radio link layer status package to the receiving side, use a retransmitting times flag in a last transmitted protocol data unit data package to count times of sending said radio link layer status package.

7. The method of claim 5, wherein:
value of the maximum sending times of said radio link layer status package is different from that of the maximum sending times of said protocol data unit data package.

8. The method of claim 2, wherein:
said not receiving the response from the receiving side refers to after said universal terrestrial radio access network sends said radio link layer status package to the receiving side, if not receiving the response from the receiving side in the time set by system, retransmitting said radio link layer status package to the receiving side, and after retransmitting times reach to maximum sending times of the radio link layer status package set by the system, activating a POLL flag of a last transmitted protocol data unit data package and retransmitting this data package, and if not receiving the response from the receiving side in the time set by the system, retransmitting said protocol data unit data package to the receiving side, and after the retransmitting times reach to the maximum sending times of the protocol data unit data package set by the system, still not receiving the response from the receiving side in the time set by the system.

9. The method of claim 8, wherein:
the maximum sending times of said radio link layer status package is larger than the maximum sending times of said protocol data unit data package.

10. The method of claim 5, 7, 8 or 9, wherein:
in the step of retransmitting said protocol data unit data package to the receiving side, use a retransmitting times flag in the last transmitted protocol data unit data package to count times of sending said protocol data unit data package;
in the step of retransmitting said radio link layer status package to the receiving side, set an individual counter to count the times of sending said radio link layer status package.

11. A device for sending a radio link layer status package, applying into universal terrestrial radio access network, and said device comprising a sending detection module, a sending module, a receiving detection module and a resetting module, wherein:
said sending detection module is configured to: notify said sending module when detecting that there is data to be sent that has already been sent but has not been acknowledged;
said sending module is configured to: send the radio link layer status package to a receiving side according to a detection result of said sending detection module;
said receiving detection module is configured to: indicate the resetting module to carry out a reset operation of radio link layer if a response from the receiving side is not received after said sending module sends the radio link layer status package;
said resetting module is configured to: carry out the reset operation of the radio link layer according to an indication of said receiving detection module.

12. The device of claim 11, wherein:
said sending detection module is also configured to: notify said sending module when detecting that there is data to be sent that has already been sent but has not been acknowledged and that the radio link layer is configured with a flexible size protocol data unit;
said sending module is also configured to: send a POLL_SUFI status package to the receiving side if the sending detection module detects that there is data to be sent that has already been sent but has not been acknowledged and that the radio link layer is configured with the flexible size protocol data unit.

13. The device of claim 12, wherein:
said receiving detection module is also configured to: indicate the resetting module to carry out the reset operation of the radio link layer if the response from the receiving side is not received in the time set by system after said sending module sends said radio link layer status package.

14. The device of claim 12, wherein:
said receiving detection module is also configured to: indicate the resetting module to carry out the reset operation of the radio link layer, if the response from the receiving side is not received in the time set by system after said sending module sends said radio link layer status package, retransmit said radio link layer status package to the receiving side and if the response from the receiving side is still not received in the time set by the system when retransmitting times reach to maximum sending times set by the system.

15. The device of claim 12, wherein:
said receiving detection module is also configured to: indicate the resetting module to carry out the reset operation of the radio link layer, if the response from the receiving side is not received in the time set by system after said sending module sends said radio link layer status package, retransmit said radio link layer status package to the receiving side and after retransmitting times reach to maximum sending times of the radio link layer status package set by the system, activate a POLL flag of a last transmitted protocol data unit data package and send this data package, and if the response from the receiving side is not received in the time set by the system, retransmit said protocol data unit data package to the receiving side, and after the retransmitting times reach to the maximum sending times of the protocol data unit data package set by the system and the response from said receiving side is still not received in the time set by the system.
